# EUROPEAN PATENT APPLICATION

(11) **EP 4 700 949 A1**
(43) Date of publication of application: **25.02.2026**
(21) Application number: 24932772.7
(22) Date of filing: 11.12.2024
(51) Int. Cl.: H01M 50/308, H01M 10/625, H01M 50/249

(54) **BATTERY MODULE**

(30) Priority: 29.03.2024 KR 20240043628
(71) Applicant: LG Energy Solution, Ltd., Seoul 07335 (KR)
(72) Inventor: AN, Seong-Woo, Daejeon 34122 (KR); KO, Yoon-Oh, Daejeon 34122 (KR); KWON, Hee-Yong, Daejeon 34122 (KR); HER, Pill-Jun, Daejeon 34122 (KR); MOON, Ki-Joo, Daejeon 34122 (KR); PARK, Chan-Hui, Daejeon 34122 (KR)
(74) Representative: BCKIP Part mbB
(86) International application number: PCT/KR2024/096704
(87) International publication number: WO 2025/206537

(57) **Abstract**

Disclosed is a battery module. The battery module includes a case having a space provided therein and including a top plate; a battery cell located inside the case; a first cover coupled to an upper surface of the top plate and having a first score line; and a second cover coupled to an upper surface of the first cover and having a second score line.

## Description

### TECHNICAL FIELD

The present disclosure relates to a battery module.

The present application claims priority to Korean Patent Application No. 10-2024-0043628 filed on March 29, 2024 in the Republic of Korea, the disclosures of which are incorporated herein by reference.

### BACKGROUND ART

As the demand for portable electronic products such as smartphones, tablet PCs, and smart watches increases significantly and electric vehicles become increasingly widespread, research is actively being conducted on batteries installed the portable electronic products, especially secondary batteries that can be repeatedly charged and discharged.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery module. At this time, each secondary battery included in one battery module may be called a battery cell. In addition, multiple battery modules may be connected to each other to form a battery pack.

However, if a plurality of battery modules are included in the battery pack as above and each battery module includes a plurality of battery cells, the battery pack may be vulnerable to a thermal chain reaction between battery modules or between battery cells. For example, if an event such as thermal runaway occurs inside one battery module, the thermal runaway needs to be prevented from propagating to other battery modules or other battery cells. If thermal runaway propagation between battery modules or battery cells is not properly prevented, an event occurring in a specific battery module or battery cell may cause a chain thermal reaction in other battery modules or other battery cells, which may cause an explosion or fire or enlarge the scale thereof.

In particular, if an event such as thermal runaway occurs in a battery module, gas or flame may be randomly discharged to the outside. At this time, if the discharge of gas or flame is not properly controlled, gas or flame may be discharged toward another battery module, which may cause a thermal chain reaction in other battery modules. In particular, a module terminal may exist at the front side of the battery module, and a component such as a module bus bar may exist for electrical connection with another battery module or battery pack. Accordingly, if flame is discharged to the front side of the battery module, the module terminal may be damaged inside the battery pack, causing an electrical short. In addition, since another battery module may exist at the front side of the battery module, if flame is discharged to the front side of a specific battery module, the discharged flame may be directed to another battery module, which may easily cause a fire to spread between battery modules.

If the thermal propagation between battery modules or battery cells is not properly controlled, the voltage drop of the battery module or battery pack may occur rapidly. This may cause a sudden shutdown of a device equipped with the battery module or battery pack, resulting in unexpected damage. For example, if a voltage drop of the battery pack occurs suddenly while an electric vehicle is in operation, it is impossible to secure sufficient time to move the electric vehicle to a safe location.

Moreover, if a fire or explosion occurs suddenly due to failure to properly control thermal propagation between battery modules or battery cells, there is a high possibility of causing casualties to users. For example, when thermal runaway occurs in an electric vehicle, if a certain amount of time is not secured before it progresses to a full-blown fire, the occupants may not be able to escape safely.

### DISCLOSURE

### Technical Problem

The present disclosure is designed to solve the problems of the related art, and therefore the present disclosure is directed to providing a battery module having an improved structure to appropriately control the emission of flame, etc. generated inside the battery module, and a battery pack and a vehicle including the same.

The present disclosure is also directed to providing a structure capable of smoothly discharging a venting gas generated inside a battery module.

The present disclosure is also directed to providing a structure capable of blocking an externally generated venting gas from flowing into the battery module.

However, the technical problems that the present disclosure seeks to solve are not limited to the above, and other problems not mentioned herein will be clearly understood by those skilled in the art from the following disclosure.

### Technical Solution

In one aspect of the present disclosure, there is provided a battery module comprising: a case having a space provided therein and including a top plate; a battery cell located inside the case; a first cover coupled to an upper surface of the top plate and having a first score line; and a second cover coupled to an upper surface of the first cover and having a second score line.

In addition, a length of the second score line may be longer than a length of the first score line.

In addition, a direction in which the first score line extends and a direction in which the second score line extends may be configured to intersect.

In addition, the top plate may have a venting hole, and the first score line may be formed in a portion facing the venting hole.

In addition, the second score line may be formed in a portion facing the first score line.

In addition, the first score line may be formed to penetrate the first cover.

In addition, the second score line may be formed to penetrate the second cover.

In addition, the battery module may further comprise an adhesive sheet disposed between the first cover and the second cover.

In addition, the adhesive sheet may have a hole that exposes the first score line.

In addition, the hole may be configured to have a diameter longer than the first score line.

In addition, the hole may be configured to have a diameter longer than the second score line.

In addition, the second score line may be configured to have a fishbone shape.

A battery pack according to one aspect of the present disclosure may include the battery module of the present disclosure.

A vehicle according to another aspect of the present disclosure may include the battery module of the present disclosure.

### Advantageous Effects

According to at least one of the embodiments of the present disclosure, when gas or flame is generated inside the battery module, the emission of such gas or flame may be appropriately controlled.

According to at least one of the embodiments of the present disclosure, the electrical safety of a battery module may be improved.

According to at least one of the embodiments of the present disclosure, heat propagation may be suppressed.

According to at least one of the embodiments of the present disclosure, thermal events caused by flame or gas out of the battery module may be suppressed.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery module according to an embodiment of the present disclosure.
FIG. 2 is a drawing showing the battery module according to an embodiment of the present disclosure, in which some components are exploded.
FIG. 3 is a drawing showing the battery module of FIG. 2, in which some components are exploded.
FIG. 4 is an enlarged view showing a score line of the battery module of FIG. 2.
FIG. 5 is a cross-sectional view taken along the cutting line A-A' of FIG. 1.
FIG. 6 is a cross-sectional view taken along the cutting line A-A' of FIG. 1 when a thermal event occurs.
FIG. 7 is a cross-sectional view taken along the cutting line A-A' of FIG. 1 when being exposed to gas generated from the outside.
FIG. 8 is a drawing showing a modified embodiment of FIG. 5.
FIG. 9 is a drawing showing a modified embodiment of FIG. 5.
FIG. 10 is a drawing showing a modified embodiment of FIG. 5.
FIG. 11 is a drawing showing a battery module according to another embodiment of the present disclosure, in which some components are exploded.
FIG. 12 is an enlarged view showing a score line and a hole of the battery module of FIG. 11.
FIG. 13 is a drawing showing a modified embodiment of FIG. 5.
FIG. 14 is a drawing showing a modified embodiment of FIG. 5.
FIG. 15 is a drawing showing a modified embodiment of FIG. 5.
FIG. 16 is a drawing showing a modified embodiment of FIG. 5.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

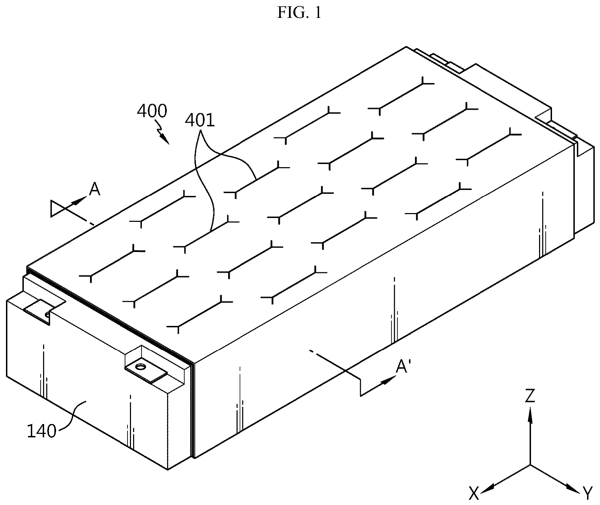

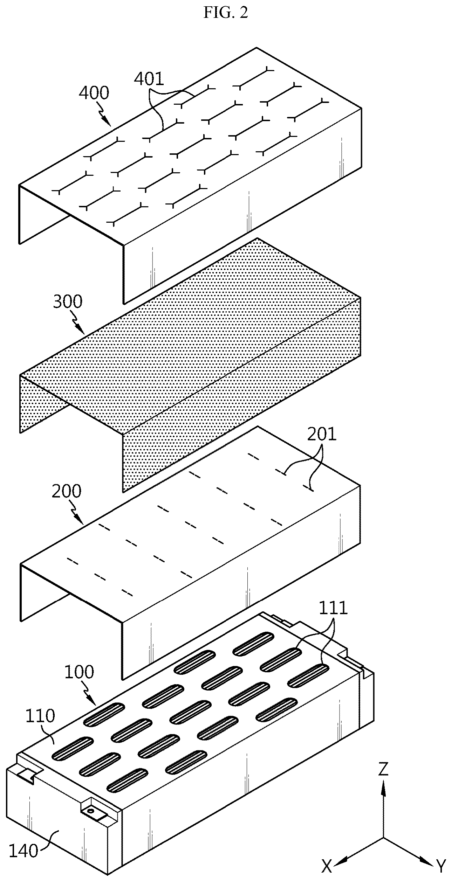

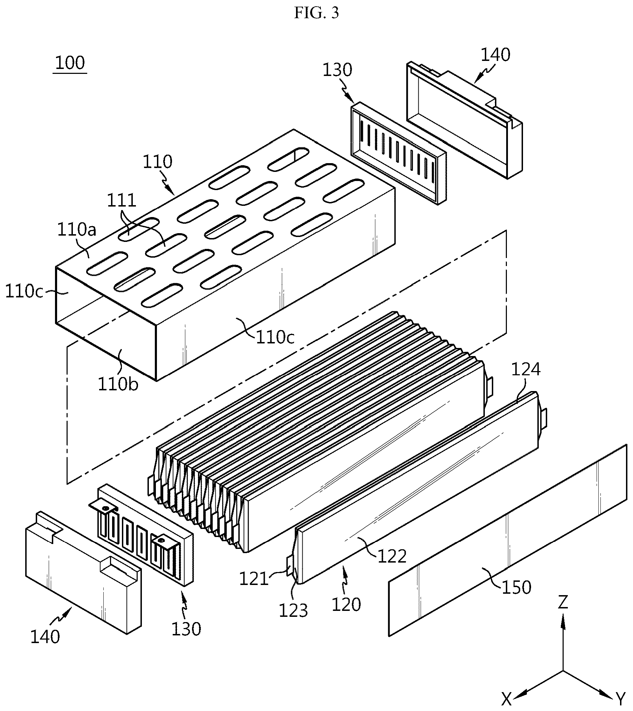

FIG. 1 is a diagram showing a battery module according to an embodiment of the present disclosure. FIG. 2 is a drawing showing the battery module according to an embodiment of the present disclosure, in which some components are exploded. FIG. 3 is a drawing showing the battery module 100 of FIG. 2, in which some components are exploded.

Referring to FIGS. 1 to 3, the battery module according to an embodiment of the present disclosure may include a case 110, a battery cell 120, a first cover 200, and a second cover 400.

The case 110 may have a rectangular parallelepiped shape. The case 110 may also be referred to as a frame 110. The case 110 may provide a space therein. The case 110 may have a top plate 110a, a bottom plate 110b, and a pair of side plates 1 10c. In addition, the case 110 may have a shape in which front and rear surfaces are opened.

The battery cell 120 may be provided in plurality. The plurality of battery cells 120 may be stacked in the right and left direction or the Y-axis direction. At this time, the battery cell 120 may mean a secondary battery. The battery cell 120 may include an accommodation portion 122 that accommodates an electrode assembly and an electrolyte. In addition, the battery cell 120 may include a first sealing portion 123 extending forward and backward from the accommodation portion 122. In addition, the battery cell 120 may include a second sealing portion 124 extending toward the upper side of the accommodation portion 122. The electrode leads 121 of the battery cell 120 may protrude forward and backward from the first sealing portion 123, respectively. In particular, the battery cell 120 may be a pouch-type secondary battery. Each battery cell 120 may extend along the front and rear direction or the X-axis direction. The electrode leads 121 may protrude forward and backward from each battery cell 120. However, the shape of the battery cell 120 is not limited to a pouch shape and may have various shapes such as a cylindrical shape or a rectangular parallelepiped shape.

A compression pad 150 may be disposed between the plurality of battery cells 120. The compression pad 150 may be disposed between at least some of the battery cells 120 and/or at the periphery of the stack. For example, the compression pad 150 may be configured to be disposed between every four battery cells 120 stacked in the right and left direction.

A compression pad 150 may be disposed between the plurality of battery cells 120. The compression pad 150 may be disposed between at least some of the battery cells 120 and/or at the periphery of the stack. For example, the compression pad 150 may be configured to be disposed between every four battery cells 120 stacked in the right and left direction.

The first cover 200 may be fastened, coupled, attached or fixed to the upper surface of the top plate 110a. The first cover 200 may have a sheet shape. An adhesive member may be disposed between the first cover 200 and the top plate 110a.

Also, the first cover 200 may be fastened, coupled, attached or fixed to the pair of side plates 110c. An adhesive member may be disposed between the first cover 200 and the pair of side plates 110c.

The first cover 200 may include a first score line 201. The first score line 201 may be used as a term that includes and collectively refers to a perforated line 201, a notching line 201, a cutting line 201, a shredding line 201, a tear line 201, or a separation line 201. The first score line 201 may be configured to be easily separated by pressure applied to the first cover 200.

Also, the first cover 200 may contain a flame retardant material. For example, the first cover 200 may contain a ceramic material. Also, the first cover 200 may contain a fire-resistant or heat-resistant material.

The second cover 400 may be fastened, coupled, attached or fixed to the upper surface of the first cover 200. The second cover 400 may have a sheet shape. The second cover 400 may include a second score line 401. The second score line 401 may be used as a term that includes and collectively refers to a perforated line 401, a notching line 401, a cutting line 401, a shredding line 401, a tear line 401 or a separation line 401. The second score line 401 may be configured to be easily separated by pressure applied to the second cover 400.

Also, the second cover 400 may contain a flame retardant material. For example, the second cover 400 may contain a ceramic material. Also, the second cover 400 may contain a fire-resistant or heat-resistant material.

According to this configuration of the present disclosure, the thermal stability of the battery module may be improved. When a thermal event occurs from the battery cell 120, the venting gas g may be discharged through the top plate 110a of the case 110. The venting gas g may separate the first score line 201. Also, the venting gas g may separate the second score line 401. As a result, the venting gas g may be discharged to the outside of the battery module. Meanwhile, when the battery module is exposed to the venting gas g generated from the outside, the first cover 200 and the second cover 400 may prevent the venting gas g generated from the outside from flowing into the battery module. As a result, the propagation of the thermal event may be suppressed or blocked.

Referring to FIGS. 1 to 3, the battery module according to an embodiment of the present disclosure may include an adhesive sheet 300. The adhesive sheet 300 may be disposed between the first cover 200 and the second cover 400. The adhesive sheet 300 may couple the first cover 200 and the second cover 400.

According to this configuration of the present disclosure, the thermal stability of the battery module may be improved. Due to the adhesive sheet 300, the first cover 200 and the second cover 400 may be stably coupled.

Referring to FIGS. 1 to 3, the battery assembly 100 of the battery module according to an embodiment of the present disclosure may include a bus bar frame assembly 130 and an end cover 140.

The bus bar frame assembly 130 may be provided at the front and rear sides of the plurality of battery cells 120, respectively. The bus bar frame assembly 130 may be electrically connected to the electrode leads 121 of the plurality of battery cells 120.

The pair of end covers 140 may be coupled to the front and rear sides of the case 110, respectively. The pair of end covers 140 may cover the front and rear surfaces of the case 110. The end covers 140 may have a rectangular shape.

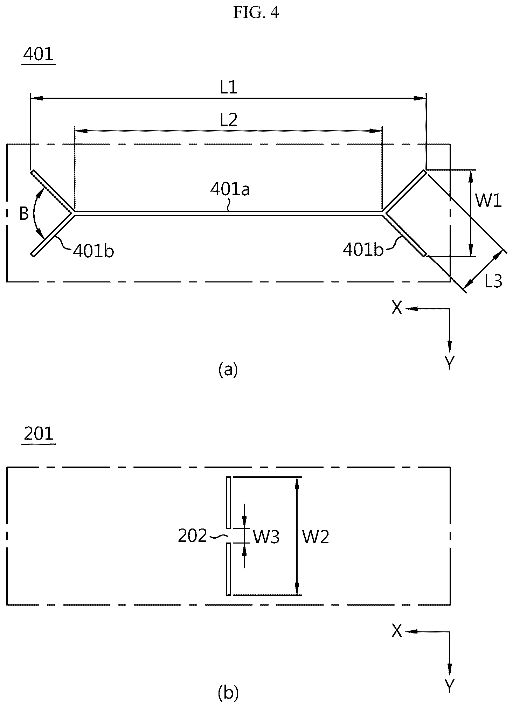

FIG. 4 is an enlarged view showing the score line 201, 401 of the battery module of FIG. 2. Referring to FIGS. 1 to 4, a length of the second score line 401 of the battery module according to an embodiment of the present disclosure may be longer than a length of the first score line 201. Accordingly, the second score line 401 may be separated more easily than the first score line 201. Alternatively, a minimum pressure for separating the first score line 201 may be higher than a minimum pressure for separating the second score line 401.

According to this configuration of the present disclosure, the thermal stability of the battery module may be improved. When a thermal event occurs from the battery cell 120, the high-pressure venting gas g may separate the first score line 201 and the second score line 401 and be discharged to the outside of the battery module. Meanwhile, when the battery module is exposed to the venting gas g generated from the outside, the first score line 201 may support the second score line 401 so that the second score line 401 is not separated. Alternatively, when the battery module is exposed to the venting gas g generated from the outside, even if the second score line 401 is separated, the first score line 201 may not be separated. As a result, the venting gas g generated from the outside may be blocked from flowing into the battery module.

Referring to FIGS. 1 to 4, the direction in which the first score line 201 of the battery module according to an embodiment of the present disclosure extends and the direction in which the second score line 401 extends may be configured to intersect. For example, the direction in which the first score line 201 extends and the direction in which the second score line 401 extends may be orthogonal.

According to this configuration of the present disclosure, the thermal stability of the battery module may be improved. Since the first score line 201 and the second score line 401 are configured to intersect, the first score line 201 may more strongly support the second score line 401 so that the second score line 401 is not separated. As a result, the venting gas g generated from the outside may be blocked from flowing into the battery module.

Referring to FIG. 4, the second score line 401 of the battery module according to an embodiment of the present disclosure may include a main line 401a extending along the right and left direction or the Y-axis direction. In addition, the second score line 401 may include an auxiliary line 401b extending from both ends of the main line 401a. The auxiliary line 401b may be formed as a pair. In addition, the auxiliary line 401b may include two lines. The two lines constituting the auxiliary line 401b may form an angle B. For example, the angle B may be a right angle. For example, the length (L2) of the main line 401a may be 54.5 mm. In addition, the length (L3) of each line constituting the auxiliary line 401b may be 13 mm. The second score line 401 may have a length (L1) in the right and left direction and a length (W1) in the front and rear direction. In this case, the shape of the second score line 401 may be called a fishbone shape.

The first score line 201 may extend along the front and rear direction or the X-axis direction. The first score line 201 may include two lines. The partition unit 202 may partition the two lines. For example, the lengths (W2) of each of the two lines constituting the first score line 201 may be 12.5 mm. In addition, the two lines constituting the first score line 201 may be arranged at an interval of 5 mm. Alternatively, the length (W3) of the partition unit 202 may be 5 mm.

The length (L1) of the second score line 401 may be formed longer than the length (W2) of the first score line 201. In addition, the length (L2) of the main line 401a may be formed longer than the length (W2) of the first score line 201.

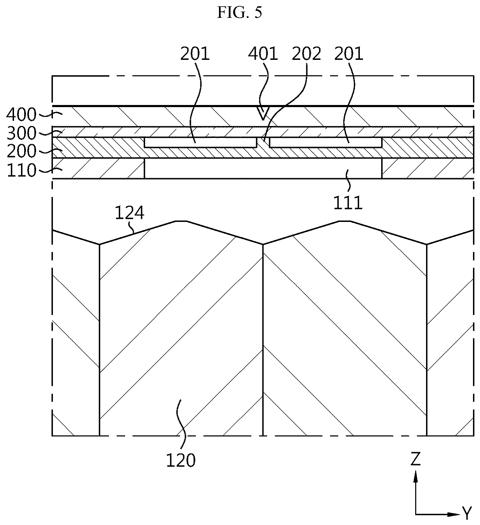

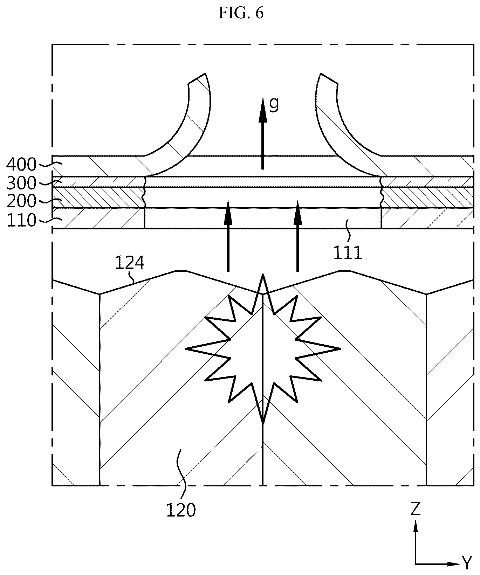

FIG. 5 is a cross-sectional view taken along the cutting line A-A' of FIG. 1. FIG. 6 is a cross-sectional view taken along the cutting line A-A' of FIG. 1 when a thermal event occurs.

Referring to FIGS. 2, 3, 5, and 6, the case 110 of the battery module according to an embodiment of the present disclosure may have a venting hole 111. The case 110 may have a venting hole 111 in the top plate 110a. The venting hole 111 may communicate the inside and the outside of the case 110. In addition, the venting hole 111 may face the second sealing portion 124 of the battery cell 120. The first score line 201 may be formed in a portion facing the venting hole 111.

According to this configuration of the present disclosure, the thermal stability of the battery module may be improved. When a thermal event occurs from the battery cell 120, the venting gas g may be discharged through the second sealing portion 124. The venting gas g may apply pressure to the first cover 200 through the venting hole 111. In addition, the first score line 201 may be separated by the venting gas g, and the venting hole 111 and the outside of the battery module may be communicated. As a result, the venting gas g may be discharged to the outside of the battery module.

Referring to FIGS. 2, 3, and 5, the second score line 401 of the battery module according to an embodiment of the present disclosure may be formed in a portion facing the first score line 201. The first score line 201, the second score line 401, and the venting hole 111 may be aligned along the upper and lower direction or the Z-axis direction.

According to this configuration of the present disclosure, the thermal stability of the battery module may be improved. The venting gas g generated inside the case 110 may separate the first score line 201 and the second score line 401. As a result, the venting hole 111 and the outside of the battery module may be communicated, and the venting gas g may be discharged to the outside of the battery module.

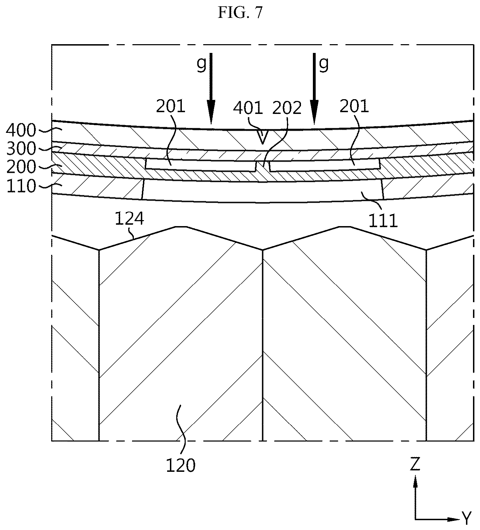

FIG. 7 is a cross-sectional view taken along the cutting line A-A' of FIG. 1 when being exposed to gas generated from the outside. Referring to FIG. 7, the battery module according to an embodiment of the present disclosure may block an external gas from flowing into the interior thereof. The first score line 201 may support the second score line 401. Alternatively, when the battery module is exposed to the externally generated venting gas g, the first score line 201 may not be separated even if the second score line 401 is separated. As a result, the externally generated venting gas g may be blocked from flowing into the battery module.

At this time, the first score line 201 may not penetrate the first cover 200. For example, the first score line 201 may be formed to a depth of about half of the thickness of the first cover 200. In addition, the second score line 401 may not penetrate the second cover 400. For example, the second score line 401 may be formed to a depth of about half of the thickness of the second cover 400.

According to this configuration of the present disclosure, the first score line 201 and the second score line 401 may be easily separated with low resistance to the pressure of the venting gas g generated inside the battery module. In addition, the first score line 201 and the second score line 401 may not be separated with high resistance to the pressure of the venting gas g generated outside the battery module.

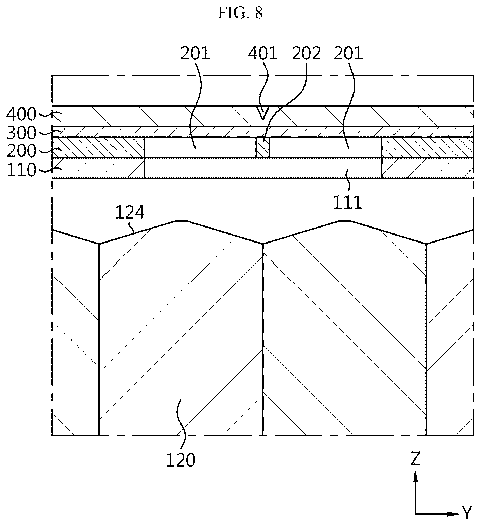

FIG. 8 is a drawing showing a modified embodiment of FIG. 5. Referring to FIG. 8, the first score line 201 of the battery module according to an embodiment of the present disclosure may be formed to penetrate the first cover 200. Accordingly, the first score line 201 may be separated more easily. At this time, the second score line 401 may not penetrate the second cover 400. For example, the second score line 401 may be formed to a depth of about half of the thickness of the second cover 400.

According to this configuration of the present disclosure, the first score line 201 and the second score line 401 may be easily separated with low resistance to the pressure of the venting gas g generated inside the battery module. In addition, the first score line 201 and the second score line 401 may not be separated with high resistance to the pressure of the venting gas g generated outside the battery module.

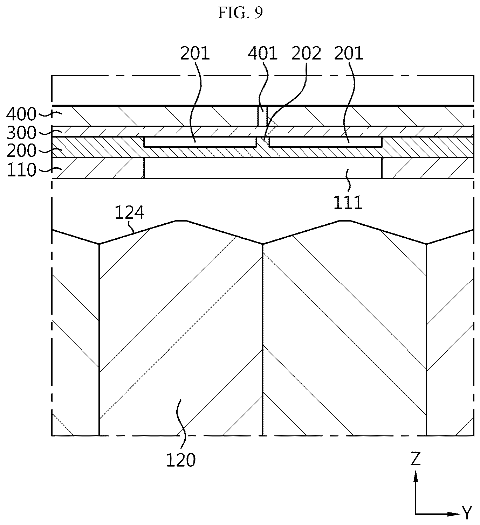

FIG. 9 is a drawing showing a modified embodiment of FIG. 5. Referring to FIG. 9, the second score line 401 of the battery module according to an embodiment of the present disclosure may be formed to penetrate the second cover 400. Accordingly, the second score line 401 may be separated more easily. At this time, the first score line 201 may not penetrate the first cover 200. For example, the first score line 201 may be formed to a depth of about half of the thickness of the first cover 200.

According to this configuration of the present disclosure, the first score line 201 and the second score line 401 may be easily separated with low resistance to the pressure of the venting gas g generated inside the battery module. In addition, the first score line 201 and the second score line 401 may not be separated with high resistance to the pressure of the venting gas g generated outside the battery module.

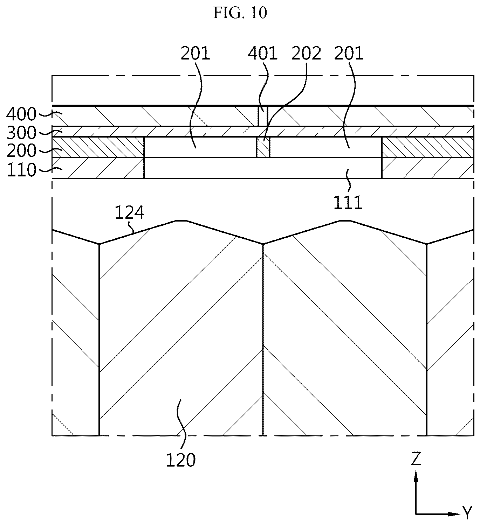

FIG. 10 is a drawing showing a modified embodiment of FIG. 5. Referring to FIG. 10, the first score line 201 of the battery module according to an embodiment of the present disclosure may be formed to penetrate the first cover 200. Also, the second score line 401 may be formed to penetrate the second cover 400. As a result, the first score line 201 and the second score line 401 may be more easily separated.

According to this configuration of the present disclosure, the first score line 201 and the second score line 401 may be easily separated with low resistance to the pressure of the venting gas g generated inside the battery module. In addition, the first score line 201 and the second score line 401 may not be separated with high resistance to the pressure of the venting gas g generated outside the battery module.

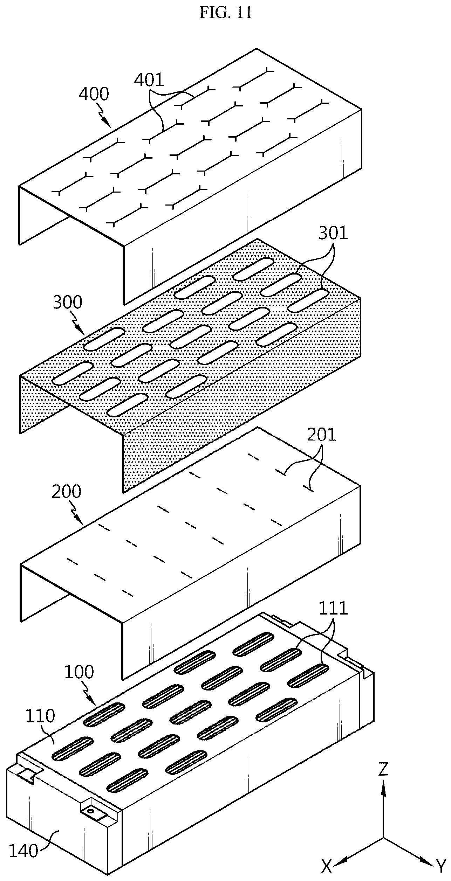

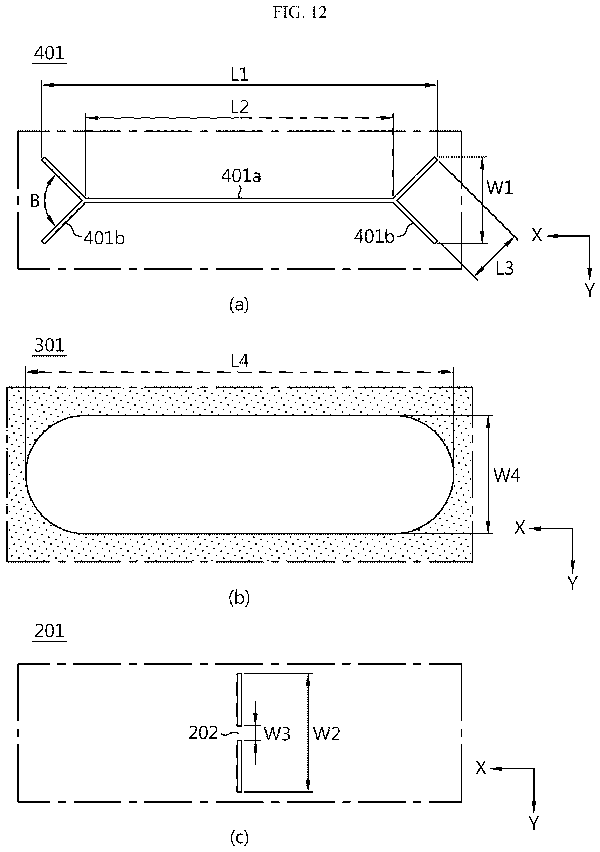

FIG. 11 is a drawing showing a battery module according to another embodiment of the present disclosure, in which some components are exploded. FIG. 12 is an enlarged view showing a score line and a hole of the battery module of FIG. 11. Referring to FIGS. 11 and 12, the adhesive sheet 300 of the battery module according to another embodiment of the present disclosure may have a hole 301. The hole 301 may be formed to penetrate the adhesive sheet 300. The hole 301 may be positioned to expose the first score line 201. Also, the hole 301 may be configured in a shape similar to the venting hole 111. The first score line 201, the hole 301, the second score line 401, and the venting hole 111 may be aligned along the upper and lower direction or the Z-axis direction.

According to this configuration of the present disclosure, the thermal stability of the battery module may be improved. Since the hole 301 is located between the first score line 201 and the second score line 401, the separation resistance between the first score line 201 and the second score line 401 may be reduced.

Referring to FIGS. 11 and 12, the hole 301 of the adhesive sheet 300 of the battery module according to another embodiment of the present disclosure may be configured to have a diameter (W4) longer than the diameter (W2) of the first score line 201 in the front and rear direction. Also, the hole 301 may have a length (L4) longer than the first score line 201 in the right and left direction. Accordingly, the first score line 201 may be entirely exposed by the hole 301.

According to this configuration of the present disclosure, the thermal stability of the battery module may be improved. Since the hole 301 is located between the first score line 201 and the second score line 401, the separation resistance between the first score line 201 and the second score line 401 may be reduced.

Referring to FIGS. 11 and 12, the hole 301 of the adhesive sheet 300 of the battery module according to another embodiment of the present disclosure may be configured to have a diameter (L4) longer than the diameter (L2) of the second score line 401 in the front and rear direction. Also, the hole 301 may have a length (W4) longer than the length (W1) of the second score line 401 in the right and left direction. Accordingly, the second score line 401 may be entirely exposed by the hole 301.

According to this configuration of the present disclosure, the thermal stability of the battery module may be improved. Since the hole 301 is located between the first score line 201 and the second score line 401, the separation resistance between the first score line 201 and the second score line 401 may be reduced.

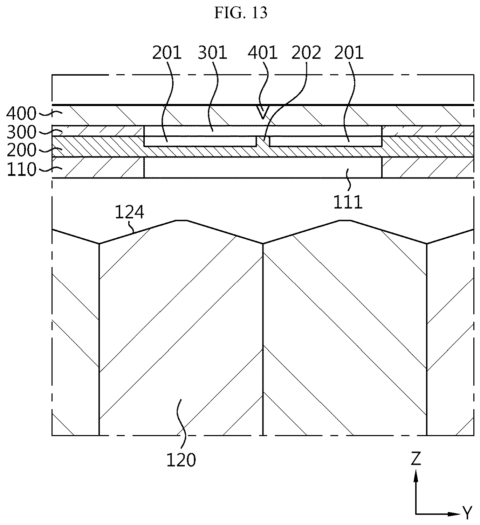

FIG. 13 is a drawing showing a modified embodiment of FIG. 5. Referring to FIG. 13, the hole 301 may be located between the first score line 201 and the second score line 401. At this time, the first score line 201 may not penetrate the first cover 200. For example, the first score line 201 may be formed to a depth of about half of the thickness of the first cover 200. In addition, the second score line 401 may not penetrate the second cover 400. For example, the second score line 401 may be formed to a depth of about half of the thickness of the second cover 400.

According to this configuration of the present disclosure, the first score line 201 and the second score line 401 may be easily separated with low resistance to the pressure of the venting gas g generated inside the battery module. In addition, the first score line 201 and the second score line 401 may not be separated with high resistance to the pressure of the venting gas g generated outside the battery module.

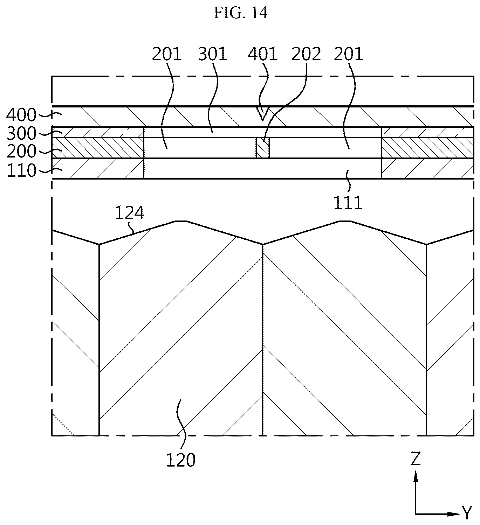

FIG. 14 is a drawing showing a modified embodiment of FIG. 5. Referring to FIG. 14, the hole 301 may be located between the first score line 201 and the second score line 401. The first score line 201 may be formed to penetrate the first cover 200. As a result, the first score line 201 may be separated more easily. At this time, the second score line 401 may not penetrate the second cover 400. For example, the second score line 401 may be formed to a depth of about half of the thickness of the second cover 400.

According to this configuration of the present disclosure, the first score line 201 and the second score line 401 may be easily separated with low resistance to the pressure of the venting gas g generated inside the battery module. In addition, the first score line 201 and the second score line 401 may not be separated with high resistance to the pressure of the venting gas g generated outside the battery module.

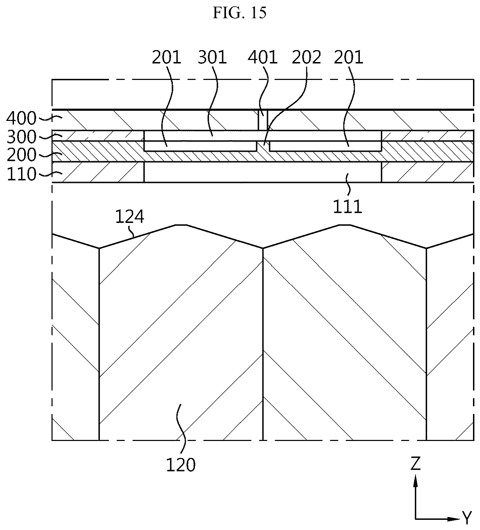

FIG. 15 is a drawing showing a modified embodiment of FIG. 5. Referring to FIG. 15, the hole 301 may be located between the first score line 201 and the second score line 401. The second score line 401 may be formed to penetrate the second cover 400. As a result, the second score line 401 may be separated more easily. At this time, the first score line 201 may not penetrate the first cover 200. For example, the first score line 201 may be formed to a depth of about half of the thickness of the first cover 200.

According to this configuration of the present disclosure, the first score line 201 and the second score line 401 may be easily separated with low resistance to the pressure of the venting gas g generated inside the battery module. In addition, the first score line 201 and the second score line 401 may not be separated with high resistance to the pressure of the venting gas g generated outside the battery module.

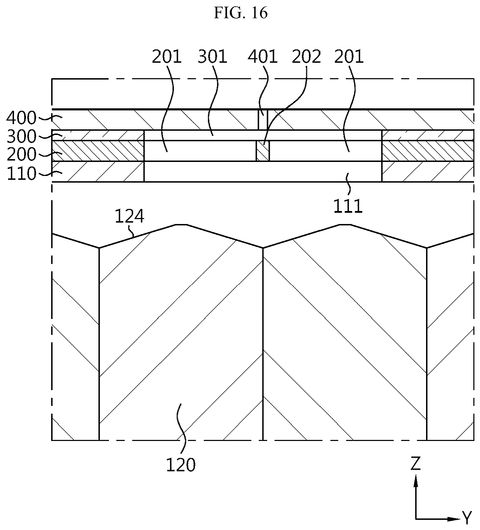

FIG. 16 is a drawing showing a modified embodiment of FIG. 5. Referring to FIG. 16, the hole 301 may be located between the first score line 201 and the second score line 401. The first score line 201 may be formed to penetrate the first cover 200. Also, the second score line 401 may be formed to penetrate the second cover 400. As a result, the first score line 201 and the second score line 401 may be more easily separated.

According to this configuration of the present disclosure, the first score line 201 and the second score line 401 may be easily separated with low resistance to the pressure of the venting gas g generated inside the battery module. In addition, the first score line 201 and the second score line 401 may not be separated with high resistance to the pressure of the venting gas g generated outside the battery module.

The battery pack according to the present disclosure may include one or more battery modules according to the present disclosure. For example, the battery pack according to the present disclosure may be configured to include a pack housing, so that a plurality of battery modules according to the present disclosure are accommodated inside the pack housing. In this case, when the battery module according to the present disclosure is accommodated, the effect of preventing heat propagation between battery modules is excellent in an emergency situation such as thermal runaway, and sufficient time for a user to respond or escape may be secured.

In addition, the battery pack according to the present disclosure may further include various components other than the battery module, such as various battery pack components known at the time of filing of this application, such as a BMS, a bus bar, a relay, a current sensor, etc.

Meanwhile, components such as a BMS, a bus bar, a relay, and a current sensor may be included as components of the battery module according to the present disclosure. In this case, the components such as a BMS, a bus bar, a relay, and a current sensor may be provided inside the case 110. In this case, the battery module may be referred to as a battery pack, and the case 110 may be referred to as a pack housing.

The battery module according to the present disclosure may be applied to a vehicle such as an electric vehicle or a hybrid electric vehicle. That is, the vehicle according to the present disclosure may include the battery module according to the present disclosure or the battery pack according to the present disclosure. In addition, the vehicle according to the present disclosure may further include various other components included in the vehicle in addition to the battery module or the battery pack. For example, the vehicle according to the present disclosure may further include a vehicle body, a motor, a control device such as an ECU (electronic control unit), in addition to the battery module according to the present disclosure.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery module comprising:
a case having a space provided therein and including a top plate;
a battery cell located inside the case;
a first cover coupled to an upper surface of the top plate and having a first score line; and
a second cover coupled to an upper surface of the first cover and having a second score line.

2. The battery module according to claim 1,
wherein a length of the second score line is longer than a length of the first score line.

3. The battery module according to claim 1,
wherein a direction in which the first score line extends and a direction in which the second score line extends are configured to intersect.

4. The battery module according to claim 1,
wherein the top plate has a venting hole, and
wherein the first score line is formed in a portion facing the venting hole.

5. The battery module according to claim 1,
wherein the second score line is formed in a portion facing the first score line.

6. The battery module according to claim 1,
wherein the first score line is formed to penetrate the first cover.

7. The battery module according to claim 1,
wherein the second score line is formed to penetrate the second cover.

8. The battery module according to claim 1, further comprising:
an adhesive sheet disposed between the first cover and the second cover.

9. The battery module according to claim 8,
wherein the adhesive sheet has a hole that exposes the first score line.

10. The battery module according to claim 9,
wherein the hole is configured to have a diameter longer than the first score line.

11. The battery module according to claim 9,
wherein the hole is configured to have a diameter longer than the second score line.

12. The battery module according to claim 1,
wherein the second score line is configured to have a fishbone shape.

13. A battery pack, comprising the battery module according to any one of claims 1 to 12.

14. A vehicle, comprising the battery module according to any one of claims 1 to 12.
